(19) **Europäisches Patentamt / European Patent Office / Office européen des brevets**

(11) **EP 3 390 039 B1**

(12) **FASCICULE DE BREVET EUROPEEN**

(45) Date de publication et mention de la délivrance du brevet:
**12.06.2019 Bulletin 2019/24**

(21) Numéro de dépôt: **16825840.8**

(22) Date de dépôt: **14.12.2016**

(51) Int Cl.:
**B32B 27/08** *(2006.01)*   **B32B 5/02** *(2006.01)*
**B32B 27/18** *(2006.01)*   **B32B 27/20** *(2006.01)*

(86) Numéro de dépôt international:
**PCT/FR2016/053412**

(87) Numéro de publication internationale:
**WO 2017/103466 (22.06.2017 Gazette 2017/25)**

(54) **STRUCTURE MULTICOUCHE COMPRENANT DES FIBRES CONTINUES POUR LE TRANSPORT DE FLUIDE DE TRANSFERT DE CHALEUR**

MEHRSCHICHTIGE STRUKTUR MIT KONTINUIERLICHEN FASERN FÜR DEN TRANSPORT VON WÄRMEÜBERTRAGUNGSFLÜSSIGKEIT

MULTILAYER STRUCTURE COMPRISING CONTINUOUS FIBERS FOR TRANSPORTING HEAT TRANSFER FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2015 FR 1562378**

(43) Date de publication de la demande:
**24.10.2018 Bulletin 2018/43**

(73) Titulaire: **Arkema France**
**92700 Colombes (FR)**

(72) Inventeurs:
• **BRULE, Benoît**
  **27170 Beaumont-le-Roger (FR)**
• **DUFAURE, Nicolas**
  **27300 Bernay (FR)**
• **MEURICE PIERRAT, Estelle**
  **27500 Corneville-sur-Risle (FR)**

(56) Documents cités:
**EP-A1- 2 578 391    DE-A1-102008 037 490**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

DOMAINE DE L'INVENTION

La présente invention concerne une structure tubulaire multicouche comportant au moins une couche interne et une seconde couche comprenant notamment des fibres continues. L'invention concerne également l'utilisation de cette structure pour le transport de fluide de transfert de chaleur, en particulier de fluide frigorigène tel que le R134, R-1234yf ou R-1234ze, en particulier dans le domaine de la climatisation automobile.

ARRIERE-PLAN TECHNIQUE

Le transport de fluide de transfert de chaleur, en particulier de fluide frigorigène dans les circuits de compression de vapeur, tels que ceux qui sont mis en oeuvre notamment dans la climatisation automobile, nécessite l'utilisation de structures multicouches présentant un ensemble de propriétés mécaniques, thermiques, et chimiques bien spécifiques.

Les éléments de ces circuits (et notamment les structures tubulaires multicouches) doivent notamment :

- être étanches aux fluides transportés et donc présenter des propriétés barrières vis-à-vis de ces fluides (et en particulier aux composés frigorigènes fluorocarbonés tels que le R134, R-1234yf ou R-1234ze), ainsi qu'à l'eau et à l'oxygène ;
- présenter une résistance chimique aux fluides transportés, ainsi qu'aux huiles des compresseurs, à l'eau et à l'oxygène, afin d'éviter une dégradation excessive sur le long terme ;
- présenter une résistance mécanique suffisante (en particulier résistance à l'éclatement) mais aussi une flexibilité suffisante dans le cas où les deux extrémités du tube sont liées à des pièces pouvant bouger l'une par rapport à l'autre (en particulier dans la climatisation automobile, où les contraintes d'encombrement et de montage sous le capot imposent de plier les structures tubulaires) et permettre l'amortissement de vibrations ;
- présenter une résistance thermique satisfaisante, compte tenu du fait que les fluides transportés peuvent être à une température élevée, et que la température de l'environnement peut également être élevée (en particulier dans la climatisation automobile, les pièces concernées pouvant être disposées au voisinage du moteur).

A l'heure actuelle, les structures tubulaires pour le transport de fluides de transfert de chaleur et en particulier de fluides frigorigènes dans la climatisation automobile comprennent des portions métalliques rigides (généralement en aluminium) et des portions flexibles en tubes multicouches. Certains de ces tubes multicouches sont connus sous le nom anglais de tubes « *veneer* » ; ils comportent successivement, de l'intérieur vers l'extérieur, une couche interne barrière à base de polyamide (ou PA), une couche intermédiaire d'élastomère de type caoutchouc, une tresse de renfort et enfin une autre couche d'élastomère de type caoutchouc.

Dans les modèles disponibles dans le commerce, la couche interne à base de polyamide peut être par exemple un PA 6 (polycaprolactame) formulé (avec ou sans plastifiant, avec ou sans modifiant choc, avec ou sans stabilisant), un copolyamide PA 6/66 formulé (avec ou sans plastifiant, avec ou sans modifiant choc, avec ou sans stabilisant), ou encore un alliage de PA 6 ou de PA 66 (polyhexaméthylène adipamide) avec des polyoléfines et des polyoléfines fonctionnalisées (produit commercialisé sous la marque Orgalloy®).

Par ailleurs, le document US 2011/0183095 décrit un tube ou un joint pour le transport de fluides de transfert de chaleur dans la climatisation automobile, comprenant une couche interne à base de PA 610 (polyhexaméthylène sébaçamide) et une couche externe à base d'un polyamide tel qu'un polyphthalamide et préférablement le joint est composé de PA 610 renforcé avec des fibres.

Le document US 2011/0272854 décrit un article comprenant un élément composé de polyamide renforcé de fibres surmoulé d'un autre élément composé de polyamide avec optionnellement un liant entre les deux éléments et où l'un au moins des polyamides est un polyamide semi-aromatique.

Le document EP 1717022 concerne des tubes multicouches pour diverses applications, et plus particulièrement pour le transport de carburant dans des véhicules, du réservoir au moteur. Ces tubes comportent une couche intermédiaire en polyamide, par exemple en PA 610 (polyhexaméthylène sébaçamide) ou PA 612 (polyhexaméthylène dodécanamide).

Le document WO 2014/125218 concerne l'utilisation d'une couche constituée d'une composition comprenant un copolyamide de formule X/10T/Y pour le transport d'un fluide de transfert de chaleur dans un circuit de compression de vapeur.

Le document DE 10 2008 037490 décrit une structure tubulaire pour le transport de fluide comprenant une couche intérieure en contact avec le fluide comprenant un polymère thermoplastique, ladite couche étant dépourvue de fibres et une couche extérieure comprenant un polymère thermoplastique et des fibres continues.

Le document EP 2578391 décrit un tuyau pour transporter un réfrigérant comprenant une couche intérieure incluant une couche barrière au gaz et une couche de caoutchouc adjacente à une couche extérieure barrière au gaz.

Le document WO 2014/125219 concerne une structure thermoplastique comportant au moins une couche constituée d'une composition à base de copolyamide semi-aromatique. La structure thermoplastique est notamment adaptée pour réaliser le transport de fluide de transfert de chaleur (tel que le R-1234yf), en particulier dans le domaine de la climatisation automobile.

Il existe un besoin de mettre au point des éléments de circuit de compression de vapeur donc des structures tubulaires pour le transport de fluide de transfert en particulier de fluide frigorigène tel que le R-1234yf ou le R-1234ze qui permettent de satisfaire le cahier des charges en termes de propriétés d'étanchéité aux fluides transportés (et en particulier aux composés frigorigènes tels que le R-1234yf ou le R-1234ze), ainsi qu'à l'eau et à l'oxygène, de résistance chimique aux fluides transportés, ainsi qu'aux huiles des compresseurs, à l'eau et à l'oxygène, de propriétés mécaniques, éventuellement de flexibilité, de résistance thermique mais surtout de simplifier et d'alléger ces structures multicouches.

En effet, le besoin d'allégement se fait particulièrement ressentir dans le domaine de la climatisation automobile, plus particulièrement lorsque le fluide de transfert de chaleur est le R-1234yf ou le R-1234ze, puisqu'il s'agit d'améliorer l'impact environnemental global du véhicule c'est-à-dire celui du contenu donc du fluide de transfert de chaleur mais celui plus globalement du contenant c'est-à-dire du véhicule et donc de la structure conduisant le fluide de transfert de chaleur.

Il existe par ailleurs un besoin de simplification de mise en oeuvre des éléments de circuits de compression de vapeur, notamment en climatisation automobile.

RESUME DE L'INVENTION

L'invention concerne en premier lieu une structure tubulaire (tout ou partie du système) pour le transport de fluide de transfert de chaleur, en particulier de fluide frigorigène comprenant au moins

i) une couche (1) en contact avec le fluide comprenant au moins un polymère $P_1$ thermoplastique semi-cristallin de $Tf_1$ supérieure ou égale à 160°C en particulier supérieure ou égale à 170°C telle que déterminée selon la norme 11357-3 (2013) ou amorphe de $Tg_1$ supérieure ou égale à 100°C de préférence 120°C en particulier 140°C telle que déterminée selon la norme 11357-2 (2013), ladite couche (1) étant dépourvue de fibres,
ii) une couche (2) comprenant au moins

    (a) un polymère $P_2$ thermoplastique semi-cristallin, en particulier un polyamide de $Tf_2$ supérieure
    ou égale à 170°C ou amorphe de $Tg_2$ supérieure ou égale à 100°C ou une polyoléfine de Tf supérieure à 100°C ;
    (b) des fibres continues
    le polymère $P_2$ étant identique à $P_1$ ou différent de $P_1$ auquel cas les polymères $P_1$ et $P_2$ adhèrent au moins
    partiellement entre eux.

Un polyamide amorphe, au sens de l'invention, désigne un polyamide présentant seulement une température de transition vitreuse (pas de température de fusion (Tf)), ou un polyamide très peu cristallin ayant une température de transition vitreuse et un point de fusion tel que l'enthalpie de cristallisation lors de l'étape de refroidissement à une vitesse de 20K/min en analyse calorimétrique différentielle (« Differential Scanning Calorimetry » DSC en anglais) mesurée selon la norme ISO 11357-3 de 2013 est inférieure à 30 J/g, notamment inférieure à 20 J/g, de préférence inférieure à 15 J/g. La température de transition vitreuse (Tg) mesurée par DSC à une vitesse de chauffe de 20K/min selon la norme ISO 11357-2 de 2013 pour ces polyamides est supérieure à 75°C.

Un polyamide semi-cristallin, au sens de l'invention, désigne un polyamide qui présente une température de fusion (Tf) en DSC selon la norme ISO 11357-3 de 2013, et une enthalpie de cristallisation lors de l'étape de refroidissement à une vitesse de 20K/min en DSC mesurée selon la norme ISO 11357-3 de 2013 supérieure à 30 J/g, de préférence supérieure à 40 J/g.

L'expression « dépourvue de fibres » signifie que la couche $P_1$ ne comprend pas de fibres courtes, longues ou continues, qu'il s'agisse de fibres minérales, de fibres polymériques ou de polymère, ou de mélanges des fibres précitées.

L'expression « fibres continues » se réfère à des matériaux fibreux continus (notamment fibre de verre ou fibre de carbone). Ces « fibres continues » sont ensuite imprégnées du polymère P2 (par une méthode d'imprégnation de fibres unidirectionnelles par passage de ces fibres, en continu, dans un lit fluidisé, une dispersion aqueuse, par dépôt de poudre de polymère ou encore par projection d'une poudre de polymère) puis l'ensemble est calandré et chauffé pour former un préimprégné unidirectionnel.

Les fibres peuvent être orientées dans le sens de la couche de la structure tubulaire ou non.

On ne sortirait pas du cadre de l'invention en remplaçant les fibres continues dans les fibres unidirectionnelles imprégnées par des fibres continues emmêlées (par exemple un tissu) qui sont ensuite imprégnées (par exemple par poudrage puis chauffage) par P2.

Le diamètre des fibres dépend du type de fibre utilisé et est compris de 3 à 50μm.

L'expression « $P_1$ et $P_2$ adhèrent au moins partiellement entre eux » signifie que $P_1$ et $P_2$ sont au moins partiellement directement et fermement liés ensemble sans la présence d'un adhésif entre les deux ou d'une autre couche.

Elle signifie aussi qu'il n'y a pas de couche de liant ni de tresse, quelle que soit sa composition, entre les deux couches (1) et (2).

Selon un mode de réalisation, ledit polymère $P_1$ est choisi parmi les polyamides, les mélanges de polyamide et de polyoléfine à matrice polyamide et l'EVOH.

Selon un mode de réalisation, ledit polymère $P_1$ est choisi parmi les polyamides et l'EVOH, en particulier les polyamides.

Selon un mode de réalisation, le polymère $P_1$ est un polyamide semi-cristallin.

Selon un mode de réalisation, le polymère $P_2$ est choisi parmi les polyamides, et les polyoléfines.

Selon un mode de réalisation, le polymère $P_2$ est un polyamide semi-cristallin.

Selon un mode de réalisation, ledit polymère $P_1$ est un polyamide semi-cristallin et ledit polymère $P_2$ est choisi parmi les polyamides et les polyoléfines.

Selon un mode de réalisation, ledit polymère $P_1$ est choisi parmi les polyamides et l'EVOH, en particulier les polyamides et le polymère $P_2$ est un polyamide semi-cristallin.

Selon un mode de réalisation, ledit polymère $P_1$ est choisi parmi les polyamides et l'EVOH, en particulier les polyamides et ledit polymère $P_2$ est choisi parmi les polyamides et les polyoléfines.

Selon un mode de réalisation, les polymères $P_1$ et $P_2$ sont des polyamides semi-cristallins.

Selon un mode de réalisation, le polymère $P_2$ est un polyamide amorphe.

Selon un mode de réalisation, le polymère $P_1$ est un polyamide semi-cristallin et le polymère $P_2$ est un polyamide amorphe.

Selon un mode de réalisation, le polymère $P_1$ est un polyamide amorphe et le polymère $P_2$ est un polyamide semi-cristallin.

Avantageusement, le polymère $P_1$ des différents modes de réalisation ci-dessus est un polyamide choisi parmi les polyphtalamides, les polyamides semi-aromatiques, notamment A/T, A/10T, A/6T, XY/10T, XY/6T, PA6, PA66, PA6/66, PA610, PA612, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy®.

A étant un motif issu de la polycondensation d'un lactame ou d'un aminoacide en C6 à C12.

X correspondant à un motif issu de la polycondensation d'une diamine aliphatique, cycloaliphatique ou aromatique avec un acide dicarboxylique aliphatique, cycloaliphatique ou aromatique.

Avantageusement, le polymère $P_1$ des différents modes de réalisation ci-dessus est un polyamide choisi parmi les polyphtalamides, les polyamides semi-aromatiques, notamment 11/10T, 612/10T, 11/6T, PA6, PA66, PA6/66, PA610, PA612, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy®.

Avantageusement, le polymère $P_1$ des différents modes de réalisation ci-dessus est un polyamide choisi parmi les polyamides semi-aromatiques, notamment 11/10T, 612/10T, 11/6T, PA6, PA66, PA6/66, PA610, PA612, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy®.

Avantageusement, le polymère P2 des différents modes de réalisation ci-dessus est un polyamide, notamment choisi parmi les polyphtalamides, les polyamides semi-aromatiques, notamment 11/10T et 11/6T, PA11, PA12, PA6, PA66, PA6/66, PA610, PA612.

Avantageusement, dans les différents modes de réalisation ci-dessus, le polymère $P_1$ est choisi parmi un polyphtalamide, un polyamide semi-aromatique, notamment 11/10T, 612/10T, 11/6T, PA6, PA66, PA6/66, PA610, PA612, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy® et le polymère P2 est un polyamide, notamment choisi parmi les polyphtalamides, les polyamides semi-aromatiques, notamment 11/10T et 11/6T, PA11, PA12, PA6, PA66, PA6/66, PA610, PA612.

Avantageusement, dans les différents modes de réalisation ci-dessus, le polymère $P_1$ est choisi parmi un polyphtalamide, un polyamide semi-aromatique, notamment 11/10T, 612/10T, 11/6T, PA6, PA66, PA6/66, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy®, à l'exclusion de PA610 et PA612.

Avantageusement, dans les différents modes de réalisation ci-dessus, le polymère $P_1$ est choisi parmi un polyamide semi-aromatique, notamment 11/10T, 612/10T, 11/6T, PA6, PA66, PA6/66, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy®, à l'exclusion de PA610 et PA612.

Avantageusement, dans les différents modes de réalisation ci-dessus, le polymère $P_1$ et/ou ledit polymère $P_2$, comprend au moins un liant.

Ledit liant est mélangé soit à $P_1$, soit à $P_2$, soit à $P_1$ et $P_2$ mais ne constitue pas une couche de liant entre $P_1$ et $P_2$.

Il est possible d'utiliser les liants décrits dans les documents EP 2098365 et EP 2098580, auxquels il est fait expressément référence ici.

En résumé, les liants en question sont des compositions comprenant au moins un polyamide noté A présentant un nombre moyen d'atomes de carbone par atome d'azote noté $C_A$ compris de 4 à 8,5, avantageusement de 4 à 7 ; au moins un polyamide noté B présentant une température de fusion supérieure ou égale à 180°C et un nombre moyen d'atomes de carbone par atome d'azote noté $C_B$ compris de 7 à 10, avantageusement de 7,5 à 9,5 ; et au moins un polyamide noté C présentant un nombre moyen d'atomes de carbone par atome d'azote noté $C_C$ compris de 9 à 18, avantageusement de 10 à 18 ; au moins 50% en poids de ladite composition étant formés d'un ou de plusieurs polyamides choisis parmi les polyamides A, B et C, la moyenne pondérée massique des enthalpies de fusion de ces polyamides au sein de ladite composition étant supérieure à 25 J/g (mesurée par DSC), et le nombre moyen d'atomes de carbone par atome d'azote des polyamides A, B et C répondant en outre à l'inéquation stricte suivante : $C_A < C_B < C_C$.

La différence entre les nombres moyens d'atomes de carbone par atome d'azote $(C_B\text{-}C_A)$ et/ou $(C_C\text{-}C_B)$ est avantageusement comprise de 1 à 4, et de préférence de 2 à 3.

Chacun des polyamides A, B et C a avantageusement une enthalpie de fusion supérieure à 25 J/g (mesurée par DSC).

Le liant est utilisé comme additif dans une couche de matière non adhésive.

Selon un mode de réalisation, la structure, définie dans l'un des modes de réalisation ci-dessus, comprend au moins une troisième couche (3) extérieure, ladite couche étant en contact avec la couche (2) et comprenant un élastomère et /ou un polymère $P_3$ identique ou différent de $P_1$ et adhérant au moins partiellement à $P_2$.

L'expression « adhérant au moins partiellement » a la même signification que ci-dessus.

Avantageusement, les fibres continues utilisées dans les modes de réalisation ci-dessus sont choisies parmi :

-    les fibres minérales,
-    les fibres de carbone ou les nanotubes de carbone,
-    les fibres polymériques ou de polymère,
-    ou les mélanges des fibres précitées.

Avantageusement, les fibres minérales sont choisies parmi : les fibres de silice comme les fibres de verre, notamment de type E, R ou S2 ; fibres de bore ; fibres céramiques, notamment de carbure de silicium, de carbure de bore, de carbonitrure de bore, de nitrure de silicium, de nitrure de bore ; fibres de basalte ; fibres ou filaments à base de métaux et leurs alliages ; fibres à base d'oxydes métalliques ; fibres de carbone métallisées et fibres de verre métallisées ou les mélanges des fibres citées.

Avantageusement, les fibres polymériques sont choisies parmi :

■ les fibres de polymères thermodurcissables
■ les fibres de polymères thermoplastiques
■ les fibres de polyamides répondant à l'une des polyamides suivants : 6, 66, 610, 612, 46, 410, 1010, 1012, 11 et 12
■ les fibres d'aramides et de polyamides aromatiques tels que ceux répondant à l'une des formules : PPD.T, MPD.I, PAA et PPA
■ ou les mélanges des fibres précitées ci-haut.

Avantageusement, la proportion en poids de fibres dans $P_2$ est comprise de 30 à 80%, de préférence de 50 à 70%.

Avantageusement, les fibres continues sont des fibres de verres.

Les fibres de verres peuvent être ensimées ou non, c'est-à-dire que, par exemple, les fibres de verre sont ensimées par une solution contenant un alcoxysilane. Il peut s'agir par exemple de fibres de verre traitées par ensimage avec la même solution que celle décrite dans le document JP H1 139628.

Avantageusement, le fluide frigorigène utilisé dans l'un des modes de réalisation ci-dessus est choisi parmi les composés hydrocarbures, hydrofluorocarbures, éthers, hydrofluoroéthers ou fluorooléfines, notamment parmi les fluoropropènes, les fluoropropanes et les fluoroéthanes ; de préférence parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci ; et de manière particulièrement préférée ledit fluide frigorigène étant du 2,3,3,3-tétrafluoropropène (1234yf) ou du 1,3,3,3-tétrafluoropropène (1234ze).

Avantageusement, le fluide frigorigène est additionné d'un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyols esters et/ou les polyvinyléthers ; le lubrifiant étant de manière plus particulièrement préférée un polyalkylène glycol ou un polyol ester.

Avantageusement, le lubrifiant est en proportion en poids de 0,5 à 50%, en particulier de 1 à 15% en poids.

Selon un mode de réalisation, la structure est un élément de circuit de compression de vapeur pour contenir ou transporter un fluide frigorigène.

## Elément de circuit de compression de vapeur

La composition de l'invention décrite ci-dessus est utilisée en tant que couche dans un élément de circuit de compression de vapeur.

Un circuit de compression de vapeur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre un fluide de transfert de chaleur, circulant dans le circuit, et un autre fluide ou corps.

L'installation peut comprendre une turbine pour générer de l'électricité (cycle de Rankine).

Le circuit de compression de vapeur peut être intégré dans une installation qui peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération (avec des installations mobiles par exemple dans les containers, ou stationnaires) et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur* ».

Par « *élément de circuit de compression de vapeur* » on entend selon la présente invention toute pièce d'un tel circuit, comportant une lumière, ladite pièce étant adaptée à contenir ou transporter le fluide de transfert de chaleur.

L'élément de circuit de compression de vapeur qui fait l'objet de la présente invention est de préférence une conduite ou tubulure (ou encore une durit). Alternativement, il peut s'agir d'un raccord ou connecteur entre tubulures, ou entre tubulure et compresseur, ou condenseur, ou échangeur de chaleur, ou encore une partie d'une capacité tampon ou d'un échangeur thermique. Le terme « lumière » désigne l'intérieur de ladite pièce dudit circuit, en particulier l'intérieur de la conduite ou de la tubulure ou l'intérieur du raccord ou connecteur.

L'élément de circuit de compression de vapeur peut également être un échangeur de chaleur en tant que tel (auquel cas il comporte au moins deux lumières pour la circulation de deux fluides identiques ou différents, l'un devant céder de la chaleur à l'autre).

Le fluide de transfert de chaleur peut être contenu ou transporté sous forme gazeuse, liquide ou diphasique dans l'élément de circuit ci-dessus.

La couche de composition selon l'invention décrite ci-dessus peut être notamment une monocouche, ou être une couche interne (destinée à venir en contact du fluide de transfert de chaleur) ou une couche externe (destinée à être au contact de l'environnement) de l'élément de circuit. Il est préféré que cette couche constitue une couche (ou revêtement) interne.

L'invention a également pour objet un procédé de fabrication de la structure telle que décrite ci-dessus, comprenant au moins une étape d'extrusion de la couche (1).

Selon un mode de réalisation, le procédé de fabrication de la structure telle que décrite ci-dessus comprend les étapes successives suivantes :

a. fabrication de ladite couche (1) par extrusion à travers une filière annulaire et

b. dépôt sur ladite couche (1) de ladite couche (2) externe à l'état fondu par la technique d'enroulement filamentaire de fibres imprégnées de polymère P2 à l'état fondu avec un ou plusieurs angles d'orientation par rapport à l'axe de ladite structure et

c. refroidissement de ladite structure.

L'invention a également pour objet l'utilisation d'une structure telle que décrite ci-dessus pour le transport d'un fluide frigorigène dans un circuit de compression de vapeur, en particulier de R-1234yf ou de R-1234ze.

La présente invention permet de surmonter les inconvénients de l'état de la technique en ce qu'elle fournit une structure permettant de satisfaire le cahier des charges en termes de propriétés d'étanchéité aux fluides transportés (et en particulier aux composés frigorigènes tels que le R-1234yf ou le R-1234ze), ainsi qu'à l'eau et à l'oxygène, de résistance chimique aux fluides transportés, ainsi qu'à l'eau et à l'oxygène, de propriétés mécaniques, de flexibilité, de résistance thermique mais surtout de simplifier les structures utilisées en terme de nombre de couches et de mise en oeuvre et d'alléger ces structures multicouches, ainsi que plus facile à mettre en oeuvre, plus légère et donc à plus faible impact environnemental.

Par rapport aux structures multicouches qui sont utilisées aujourd'hui dans le commerce comme éléments de circuits de compression de vapeur de climatisation automobile, les structures de l'invention présentent notamment des propriétés améliorées, permettant leur utilisation comme couche à propriétés améliorées :

- de barrière aux fluides de transfert de chaleur (notamment R-1234yf ou R-1234ze, mais également R-134a par exemple) ; et/ou
- de stabilité dimensionnelle à l'eau ; et/ou
- de barrière à l'eau ; et/ou
- de tenue thermique et chimique en présence de R-1234yf ou de R-1234ze et de lubrifiant, en particulier du type PAG ; et/ou
- de tenue thermique à long terme ; et/ou
- de flexibilité dans le cas où les deux extrémités du tube sont liées à des pièces pouvant bouger l'une par rapport à l'autre.

Par ailleurs, la réalisation de ces structures à couches en polymères, par rapport aux structures traditionnelles en caoutchouc avec une couche interne de polyamide, reliées à des structures en aluminium, permet de simplifier les connexions et de limiter les risques de fuite.

Elle permet aussi une réduction de poids des structures et une réduction de coût.

La $T_g$ et la $T_f$ sont classiquement mesurées par DSC (calorimétrie différentielle à balayage) selon respectivement la norme 11357-2 (2013) et la norme 11357-3 (2013). Elles sont déterminées, ici, lors d'une rampe de température de 20°C/min.

Comme cela sera détaillé ci-dessous, la structure peut comporter un ou plusieurs polymères, organisés en deux ou plusieurs couches. Elle peut également comporter divers additifs et charges (et notamment un ou plusieurs polymères élastomériques mélangés aux polymères thermoplastiques et n'affectant pas le caractère thermoplastique des compositions concernées).

Les dits additifs ou charges sont différents des fibres.

## DESCRIPTION DE MODES DE REALISATION DE L'INVENTION

L'invention est maintenant décrite plus en détail et de façon non limitative dans la description qui suit.

*Le polymère thermoplastique P1 ou P2*

**S'agissant du polymère thermoplastique,** il peut être semi-cristallin ou amorphe.

Lorsque le polymère thermoplastique est $P_1$, il est choisi parmi les polyamides et l'EVOH, en particulier c'est un polyamide ou un mélange de polyamides.

Lorsque le polymère thermoplastique est $P_2$, il est choisi parmi les polyamides et les polyoléfines.

**S'agissant des polyamides ou des mélanges de polyamides.**

La nomenclature utilisée pour définir les polyamides est décrite dans la norme ISO 1874-1:1992 "Plastiques - - Matériaux polyamides (PA) pour moulage et extrusion - - Partie 1: Désignation", notamment en page 3 (tableaux 1 et 2) et est bien connue de l'homme du métier.

Le polyamide selon la présente invention peut avoir une structure homopolyamide ou copolyamide.

Par homopolyamide, au sens de la présente invention, on entend un polyamide, qui n'est constitué que de la répétition d'une unique unité.

Par copolyamide, au sens de la présente invention, on entend un polyamide, qui est constitué de la répétition d'au moins deux unités de structure chimique différentes. Ce copolyamide peut présenter une structure aléatoire, alternée ou à blocs.

Le polyamide selon la présente invention peut comprendre une ou plusieurs unités de structure choisie parmi les amino-acides, les lactames et les unités (diamine).(diacide).

Lorsque le polyamide comporte un aminoacide dans sa structure, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque, A désignant le nombre d'atomes de carbone dans le motif.

Lorsque le polyamide comporte un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame (A=12).

Lorsque le polyamide comporte est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule $H_2N\text{-}(CH_2)_a\text{-}NH_2$, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Aminés" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléique et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane. Lorsque le diacide est aromatique, il est choisi parmi l'acide téréphtalique (noté T), isophtalique (noté I) et les diacides naphtaléniques.

Avantageusement, la proportion de polyamide $P_1$ est comprise d'au moins 55% en poids.

Avantageusement, la proportion de polyamide P2 est comprise de 10 à 70% en poids, notamment de 20 à 50% en poids, de préférence de 30 à 40% en poids.

Avantageusement, la proportion de polyamide $P_1$ est comprise d'au moins 55% en poids et la proportion de polyamide P2 est comprise de 20 à 50% en poids, de préférence de 30 à 40% en poids.

Avantageusement, la proportion de polyamide $P_1$ est comprise d'au moins 55% en poids et la proportion de polyamide P2 est comprise de 10 à 70% en poids, notamment de 20 à 50% en poids, de préférence de 30 à 40% en poids et la proportion de fibres dans P2 est comprise de 30% à 80% en poids, notamment de 30 à 50% en poids.

Avantageusement, ledit polyamide $P_1$ est tel que défini ci-dessus.

Avantageusement, ledit polyamide de $P_2$ est tel que défini ci-dessus.

Avantageusement, $P_1$ et $P_2$ sont identiques.

Le polyamide de l'invention présente avantageusement un indice de polymolécularité, noté Ip inférieur ou égal à 3,5. De préférence, l'indice de polymolécularité dudit polyamide est compris de 2,0 à 3,0.

Cet indice est mesuré de manière classique et connue de l'homme du métier, par chromatographie d'exclusion stérique ou de perméation de gel. De préférence, l'indice de polymolécularité des polyamides de l'invention est mesuré par chromatographie de perméation de gel. Plus particulièrement, il est mesuré dans un solvant approprié pour le polyamide, tel qu'un solvant fluoré comme par exemple l'hexafluoroisopropanol, à une température comprise de 20°C à 50°C, de préférence à 40°C.

Si la plupart des monomères ou produits de départ envisagés dans la présente description (aminoacides, diamines, diacides) sont saturés, rien n'interdit d'envisager qu'ils puissent être partiellement insaturés.

On notera par exemple que le diacide carboxylique en C18 peut être l'acide octadécanedioïque, qui est saturé, ou bien l'acide octadécènedioïque, qui présente quant à lui une insaturation.

Le polyamide de l'invention peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être la 1,10-décanediamine ou, lorsqu'ils sont présents, notamment l'acide 11-aminoundécanoïque, les diamines et diacides aliphatiques et linéaires tels que définis ci-dessus.

Les polyamides de l'invention peuvent être préparés par polycondensation des comonomères définis ci-dessus, par exemple en présence d'acide hypophosphoreux ou d'au moins un de ses sels.

La description détaillée d'un tel procédé de polycondensation figure notamment dans le document WO 2010/015786.

Le polyamide de l'invention présente de préférence une teneur en fins de chaîne amine supérieure ou égale à 20 mmol/kg, une teneur en fins de chaîne acide inférieure ou égale à 100 mmol/kg, et une teneur en fins de chaîne non réactive supérieure ou égale à 20 mmol/kg.

La teneur en fins de chaîne de chacune des fonctions amine, acide et la fonction non réactive est mesurée de manière classique par RMN (Résonance Magnétique Nucléaire).

Afin d'ajuster la teneur en fins de chaîne, il est possible d'utiliser des agents de terminaison de chaînes, c'est-à-dire des composés capables de réagir avec les fonctions terminales amine et/ou acide carboxylique des polyamides, stoppant ainsi la réactivité de l'extrémité de la macromolécule, et donc la polycondensation.

Les agents de terminaison de chaînes appropriés pour réagir avec la fonction terminale amine peuvent être des acides monocarboxyliques, des anhydrides, tels que l'anhydride phtalique, des acides monohalogénés, des monoesters ou les monoisocyanates. De préférence, les acides monocarboxyliques sont utilisés. Ils peuvent être choisis parmi les acides aliphatiques monocarboxyliques, tels que l'acide acétique, l'acide propionique, l'acide lactique, l'acide valérique, l'acide caproïque, l'acide caprique, l'acide la urique, l'acide tridécylique, l'acide myristique, l'acide palmitique, l'acide stéarique, l'acide pivalique et l'acide isobutyrique ; les acides alicycliques, tels que l'acide cyclohexanecarboxylique ; les acides aromatiques monocarboxyliques tels que l'acide toluïque, l'acide α-naphthalènecarboxylique, l'acide β-naphthalènecarboxylique, l'acide méthylnaphthalène carboxylique, l'acide phénylacétique ; et leurs mélanges. Les composés préférés sont les acides aliphatiques, et notamment l'acide acétique, l'acide propioníque, l'acide lactique, l'acide valérique, l'acide caproïque, l'acide caprique, l'acide laurique, l'acide tridécylique, l'acide myristique, l'acide palmitique et l'acide stéarique.

Parmi les agents de terminaison de chaînes appropriés pour réagir avec la fonction terminale acide, peuvent être cités des monoamines, des monoalcools, des monoisocyanates. De préférence, les monoamines sont utilisées. Elles peuvent être choisies parmi des monoamines aliphatiques, telles que la méthylamine, l'éthylamine, la propylamine, la butylamine, l'héxylamine, l'octylamine, la décylamine, la laurylamine, la stéarylamine, la diméthylamine, la diéthylamine, la dipropylamine et la dibutylamine ; les amines alicycliques, telles que la cyclohexylamine et la dicyclohexylamine ; les monoamines aromatiques, telles que l'aniline, la toluidine, la diphénylamine et la naphthylamine ; et leurs mélanges.

Les composés préférés sont la butylamine, l'hexylamine, l'octylamine, la décylamine, la laurylamine, la stéarylamine, la cyclohexylamine et l'aniline.

Il est également possible de faire réagir les extrémités acide et/ou amine, respectivement avec des bases minérales comme les hydroxydes alcalins et alcalino-terreux tels que la potasse et la soude, et avec des acides minéraux comme HCl, $HNO_3$ et $H_2SO_4$.

Les agents de terminaison de chaîne peuvent être introduits au cours de la première et/ou de la seconde étape, dans le cas des procédés de fabrication à deux étapes décrits ci-dessus. Il est fait référence ici pour plus de détails au document WO 2010/015785.

### S'agissant des polyoléfines

La polyoléfine peut être fonctionnalisée ou non fonctionnalisée ou être un mélange d'au moins une fonctionnalisée et/ou d'au moins une non fonctionnalisée, de Tf supérieure à 100°C.

On entend par polyoléfine, un homopolymère ou copolymère comprenant un ou plusieurs motifs oléfines tels que des motifs éthylène, propylène, butène-1, octène-1, butadiène, ou toute autre alpha-oléfine. A titre d'exemple de polyoléfine, on peut citer le polyéthylène et, notamment, le polyéthylène basse densité (LDPE), le polyéthylène haute densité (HDPE), le polyéthylène à basse densité linéaire (LLDPE) et le polyéthylène très basse densité (VLDPE) ; le polypropylène ; les copolymères éthylène/propylène ; ou encore les polyéthylènes métallocènes obtenus par catalyse monosite.

Sont également préférés les copolymères de l'éthylène et d'EVA (de Tf supérieure à 100°C).

### Additifs

Il est possible d'ajouter au polyamide P1 et/ou P2 et à la polyoléfine, à l'issue de son procédé de fabrication, outre le solde de diamine, des additifs habituels, tels que définis ci-après en fonction de la couche dans laquelle ils sont présents:

### Polymère P1

Le polymère $P_1$ peut comprendre au moins un additif choisi parmi un antioxydant, un stabilisant thermique, un absorbeur d'UV, un stabilisant à la lumière, un lubrifiant, une charge, un agent ignifugeant, un agent nucléant, un plastifiant, un modifiant choc et un colorant.

Les fibres sont exclues des additifs et en particulier le terme « charge» exclut les fibres.

De préférence, les additifs du polyamide $P_1$ de l'invention se présentent en une quantité de 1 à 45 %, de préférence de 5 à 45 %, ou de 15 à 45 %, en poids par rapport au poids de la composition présente dans P1.

Par l'expression « modifiant choc », il faut entendre un polymère à base depolyoléfine présentant un module de flexion inférieur à 100 MPa mesuré selon la norme ISO 178 :2010 et de Tg inférieur à 0°C (mesurée selon la norme 11357-2 :2013 au niveau du point d'inflexion du thermogramme DSC).

La polyoléfine peut être fonctionnalisée ou non.

Lorsque la polyoléfine est fonctionnalisée, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère étylène-octène, un terpolymère éthylène-acrylate d'alkyle-anhydride maléique.

Le plastifiant utilisé comme additif dans le polymère $P_1$ est avantageusement un plastifiant qui présente une bonne stabilité thermique afin qu'il ne se forme pas de fumées lors des étapes de mélange des différents polymères et de transformation de la composition obtenue.

En particulier, ce plastifiant peut être choisi parmi :

- les dérivés du benzène sulfonamide tels que le n-butyl benzène sulfonamide (BBSA), les isomères ortho et para de l'éthyl toluène sulfonamide (ETSA), le N-cyclohexyl toluène sulfonamide et le N-(2-hydroxypropyl) benzène sulfonamide (HP-BSA),

- les esters d'acides hydroxybenzoïques tels que le para-hydroxybenzoate d'éthyl-2-hexyle (EHPB) et le para-hydroxybenzoate de décyl-2-hexyle (HDPB),
- les esters ou éthers du tétrahydrofurfurylalcool comme l'oligoéthylèneoxy-tétrahydrofurfurylalcool, et
- les esters de l'acide citrique ou de l'acide hydroxymalonique, tels que l'oligoéthylèneoxymalonate.

Un plastifiant préféré, car couramment utilisé, est le n-butyl benzène sulfonamide (BBSA).

On peut aussi utiliser un mélange de plastifiants.

Le plastifiant utilisé comme additif dans le polymère $P_1$ est en proportion massique de 0 à 15 %, de manière plus particulièrement préférée de 0 à 8 %.

Avantageusement, le polymère $P_1$ comprend un modifiant choc et un plastifiant.

Le stabilisant thermique utilisé comme additif dans le polymère $P_1$ peut être présent en une quantité de 0 à 4 %, notamment de 0,01 à 2 % ou de 0,1 à 1 % en poids par rapport au poids total de la composition de polymère $P_1$.

Il peut s'agir d'un stabilisant thermique organique ou au cuivre.

Plus particulièrement, il peut s'agir d'un sel de cuivre ou d'un dérivé de sel de cuivre, par exemple d'iodure de cuivre, de bromure de cuivre, d'halogénures de cuivre, de dérivés ou de mélanges de ceux-ci. Les sels de cuivre I sont préférés. Des exemples sont l'iodure de cuivre, le bromure de cuivre, le chlorure de cuivre, le fluorure de cuivre, le thiocyanate de cuivre, le nitrate de cuivre, l'acétate de cuivre, le naphthénate de cuivre, le caprate de cuivre, le laurate de cuivre, le stéarate de cuivre, l'acétylacétonate de cuivre, l'oxyde de cuivre. L'iodure de cuivre, le bromure de cuivre, le chlorure de cuivre, le fluorure de cuivre sont préférés.

On peut également prévoir à titre de stabilisant thermique un sel d'halogénure métallique en combinaison avec LiI, NaI, KI, $MgI_2$, KBr ou $CaI_2$. KI et KBr sont préférés.

D'autres stabilisants thermiques possibles sont les antioxydants phénoliques à encombrement stérique. Ces composés sont décrits en détail dans le document US 2012/0279605, aux paragraphes [0025] et [0026], auxquels il est fait expressément référence ici.

Toutefois, selon un mode de réalisation alternatif, la composition de l'invention est dépourvue de tels antioxydants phénoliques encombrés.

Un antioxydant secondaire de type phosphite peut également être utilisé.

Une autre catégorie de stabilisants possibles sont les stabilisants UV à base d'amine à encombrement stérique (ou HALS), qui sont des dérivés de la 2,2,6,6-tétraméthylpipéridine. On peut les utiliser par exemple dans une gamme de 0 à 1 %, ou de 0,01 à 0,5 %.

Parmi les colorants, on peut citer notamment le noir de carbone. Les colorants ou pigments (en vue de colorer la composition) peuvent être présents par exemple à hauteur de 0,1 à 0,2 % en poids.

Parmi les charges, on peut citer la silice, le graphite, le graphite expansé, le noir de carbone, les billes de verre, le kaolin, la magnésie, les scories, le talc, oxydes métalliques (oxyde de titane), les métaux.

Les charges telles que le graphite expansé par exemple peuvent permettre d'augmenter la conductivité thermique du matériau (par exemple afin de promouvoir un échange de chaleur entre une lumière d'un tube comportant une couche de composition de l'invention et l'extérieur, ou entre deux lumières d'un tube comportant une couche de composition de l'invention).

## Polymère P2

Le polymère P2 peut comprendre : des additifs absorbant dans l'UV ou IR de façon à permettre le soudage du composite obtenu, par une technologie laser (UV ou IR), des stabilisants thermiques choisis parmi les antioxydants de type phénols stériquement encombrés ou amines stériquement encombrées (HALS) et des modifiants chocs. La fonction de ces stabilisants est de prévenir l'oxydation thermique, la photoxydation et la dégradation conséquente du polyamide matrice du composite obtenu.

Un antioxydant secondaire de type phosphite peut également être utilisé.

Les stabilisants thermiques et l'antioxydant secondaire sont tels que définis pour le polymère $P_1$.

Toutefois, l'une et/ou l'autre des couches (polymère $P_1$ et/ou $P_2$) de la structure de l'invention peut également comprendre d'autres composés en dehors de ceux qui viennent d'être cités. La composition de l'invention (polymères $P_1$ et/ou $P_2$) peut notamment comprendre en outre au moins un additif supplémentaire et/ou au moins un polymère supplémentaire.

Les additifs supplémentaires peuvent notamment être choisis parmi les adjuvants aidant à la transformation (ou « *processing aids* »).

Parmi les adjuvants aidant à la transformation, on peut citer les stéarates, tels que les stéarates de calcium ou de zinc, les cires naturelles, les polymères comprenant du tétrafluoroéthylène (TFE).

La proportion pondérale en « *processing aids* » est classiquement comprise de 0,01 à 0,3 % en poids, avantageusement de 0,02 à 0,1 % en poids, par rapport au poids total de la composition.

L'une et/ou l'autre des couches de la structure de l'invention peut en outre comprendre un ou plusieurs polymères supplémentaires, un tel polymère étant distinct du polymère mentionnés ci-avant. Alternativement, l'une et/ou l'autre des couches de la structure de l'invention de l'invention peut être dépourvue d'un tel polymère supplémentaire.

Le polymère supplémentaire peut notamment être choisi parmi un polyamide autre que celui défini précédemment, un polyamide-bloc-éther, un polyétheramide, un polyesteramide, un polysulfure de phénylène (PPS), un polyphénylène oxyde (PPO), et leurs mélanges.

La composition peut ainsi contenir jusqu'à 20 % en poids, par rapport au poids total de la composition, d'au moins un polymère supplémentaire.

Structure tubulaire

La structure tubulaire objet de l'invention peut notamment être un tube ou une conduite, ou bien une pièce de connexion ou de raccord entre tubes, ou entre un tube et un dispositif (tel qu'un compresseur, un condenseur, un échangeur de chaleur par exemple).

La structure tubulaire peut être formée d'une couche unique constituée par la composition décrite ci-dessus.

L'épaisseur totale de la structure de l'ensemble des couches peut par exemple aller de 0,5 mm à 5 mm, de préférence de 1 mm à 3 mm.

L'utilisation des structures tubulaires selon l'invention permet de simplifier la conception de circuits, en permettant une connexion aisée par soudure (par exemple soudure par rotation, soudure par ultrasons, soudure laser ou soudure par induction).

Application à un circuit de compression de vapeur

Un circuit de compression de vapeur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre un fluide de transfert de chaleur, circulant dans le circuit, et un autre fluide ou corps.

L'installation peut comprendre une turbine pour générer de l'électricité (cycle de Rankine).

Le circuit de compression de vapeur peut être intégré dans une installation qui peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération (avec des installations mobiles par exemple dans les containers, ou stationnaires) et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur* ».

Une structure thermoplastique selon l'invention peut être utilisée en tant qu'« *élément de circuit de compression de vapeur* », c'est-à-dire en tant que pièce d'un tel circuit comportant. Une telle pièce comporte une lumière adaptée à contenir ou transporter le fluide de transfert de chaleur.

L'élément de circuit de compression de vapeur en question est de préférence une conduite ou tubulure (ou encore une durit). Alternativement, il peut s'agir d'un raccord ou connecteur entre tubulures, ou entre tubulure et compresseur, ou condenseur, ou échangeur de chaleur ou encore une partie d'une capacité tampon ou d'un échangeur thermique. L'élément de circuit de compression de vapeur peut également être un échangeur de chaleur en tant que tel (auquel cas il comporte au moins deux lumières pour la circulation de deux fluides identiques ou différents, l'un devant céder de la chaleur à l'autre).

Le fluide de transfert de chaleur peut être contenu ou transporté sous forme gazeuse, liquide ou diphasique dans l'élément de circuit ci-dessus.

Fabrication des matériaux thermoplastiques de la structure de l'invention

Les différentes couches de la structure de l'invention peuvent être préparées par toute méthode qui rend possible l'obtention d'un mélange homogène telle que l'extrusion à l'état fondu.

Plus particulièrement, elles peuvent être préparées par mélange à l'état fondu du(des) polyamide(s), éventuellement du(des) plastifiant(s) et éventuellement des produits permettant d'obtenir la (ou les) polyoléfine(s) réticulée(s).

Les éventuels additifs et/ou polymères supplémentaires peuvent, quant-à-eux, être introduits, soit en même temps que les polyamide(s) cristallins, plastifiant(s) et produits permettant d'obtenir la (ou les) polyoléfine(s) réticulée(s) soit lors d'une étape ultérieure.

Avantageusement, la composition peut être obtenue sous forme de granulés par compoundage, notamment au moyen d'une extrudeuse bi-vis, d'un co-malaxeur ou d'un mélangeur interne.

Fluide de transfert de chaleur

Par « *composé de transfert de chaleur* », respectivement « *fluide de transfert de chaleur* » (ou fluide frigorigène, ou réfrigérant), on entend un composé, respectivement un fluide, susceptible d'absorber de la chaleur en s'évaporant à basse température et basse pression et de fournir de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

En outre, le fluide de transfert de chaleur peut éventuellement comprendre un ou plusieurs additifs qui ne sont pas des composés de transfert de chaleur pour l'application envisagée.

Les composés de transfert de chaleur peuvent être des composés hydrocarbures, éthers, hydrofluoroéthers, hydrofluorocarbures ou fluorooléfines ou HFO. Les hydrofluorocarbures et les fluorooléfines sont préférés, et plus particulièrement les fluorooléfines. Les fluoropropènes, les fluoropropanes et les fluoroéthanes sont préférés.

Des exemples de composés de transfert de chaleur préférés, utilisés individuellement ou en mélange, sont le 1,3,3,3-tétrafluoropropène (R-1234ze), le 2,3,3,3-tétrafluoropropène (R-1234yf), le 1,2,3,3,3-pentafluoropropène (R-1225ye), le 1,1,3,3-tétrafluoropropène (R-1234zc), le 3,3,3-trifluoropropène (R-1243zf), le 2,3,3-trifluoropropène (R-1243yf), le 1,1,1,2-tétrafluoroéthane (R-134a), le 1,1,2,2-tétrafluoroéthane (R-134), le pentafluoroéthane (R-125), le difluorométhane (R-32), le 1,1-difluoroéthane (R-152a), le 1,1,1,2,3,3,3-heptafluoropropane (R-227ea), le 1,1,1-trifluoropropane (R-263), le 1,1,1,3,3,3-hexafluoropropane (R-236fa), le 1,1,1,3,3-pentafluoropropane (R-245fa), le 1,1,1,3,3-pentafluorobutane (R-365mfc) et le trifluoroiodométhane.

Les composés ci-dessus peuvent également être utilisés en mélange avec de l'ammoniac ou du dioxyde de carbone.

Selon un mode de réalisation préféré, le fluide de transfert de chaleur est du R-134a, ou du R-1234yf ou R-1234ze, ce dernier étant particulièrement préféré.

Les mélanges de R-1234yf ou R-1234ze et d'ammoniac, et de R-1234yf ou R-1234ze et de dioxyde de carbone, sont également préférés, tout particulièrement pour la climatisation stationnaire.

Les additifs peuvent notamment être choisis parmi les lubrifiants, les nanoparticules, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkylène glycols (PAG), des polyol esters et / ou des polyvinyléthers.

Selon l'invention, il est particulièrement préféré que le fluide de transfert de chaleur circulant dans le circuit de compression de vapeur comprenne un lubrifiant PAG ou un lubrifiant POE.

Selon un mode de réalisation particulièrement préféré de l'invention, le fluide de transfert de chaleur est du R-1234yf ou R-1234ze additionné de lubrifiant PAG (et éventuellement d'additifs supplémentaires).

Parmi les lubrifiants PAG, il est notamment possible d'utiliser ceux qui sont décrits dans le document US 2010/0282999, auquel il est expressément fait référence ici. Ces lubrifiants répondent à la formule $R_1$-$(OR_3)_n$-$R_2$, dans laquelle $R_1$ et $R_2$ sont identiques ou différents et représentent un atome d'hydrogène, un groupe alkyle en C1-C5 ou un groupe acyle en C2-C5, $R_3$ représente un groupe alkylène en C2-C4, et la proportion molaire de groupes alkylènes en C2 dans les motifs $R_3$ est au plus de 30 %. La valeur hydroxyle est de préférence au plus de 100 mgKOH/g, ou de 50, 30 ou 10 mgKOH/g. Le poids moléculaire en nombre du PAG est de préférence de 500 à 3000, ou de 600 à 2000 ou de 600 à 1500.

Parmi les lubrifiants PAG, il est également possible d'utiliser ceux qui sont décrits dans le document US 2010/0175421, auquel il est expressément fait référence ici. Ces lubrifiants répondent à la formule $R_1$-$[(OR_2)_m$-$R_3]_n$, dans laquelle $R_1$ représente un atome d'hydrogène, un groupe hydrocarboné ayant 1 à 10 atomes de carbone, un groupe acyle ayant 2 à 10 atomes de carbone, un groupe hydrocarboné ayant 2 à 6 sites de liaison et 1 à 10 atomes de carbone ou un groupe hydrocarboné contenant un atome d'oxygène ayant 1 à 10 atomes de carbone, $R_2$ représente un groupe alkylène ayant 2 à 4 atomes de carbone, $R_3$ représente un atome d'hydrogène, un groupe hydrocarboné ayant 1 à 10 atomes de carbone, un groupe acyle ayant 2 à 10 atomes de carbone, ou un groupe hydrocarboné contenant un atome d'oxygène ayant 1 à 10 atomes de carbone, n représente un entier de 1 à 6 et m est un nombre tel que la valeur moyenne m x n est de 6 à 80. Des exemples de tels PAG sont le polypropylène glycol diméthyléther, le copolymère de polyéthylène-polypropylène glycol diméthyléther, le copolymère de polyéthylène-polypropylène glycol méthylbutyléther et le diacétate de polypropylène glycol. La valeur hydroxyle est de préférence de 5 mgKOH/g ou moins, ou de 3 mgKOH/g ou moins, ou de 1 mgKOH/g ou moins. Le poids moléculaire en nombre du PAG est de préférence de 500 à 3000, ou de 600 à 2500.

Parmi les lubrifiants PAG, il est également possible d'utiliser ceux qui sont décrits dans le document WO 2010/075046, auquel il est expressément fait référence ici. Ces lubrifiants répondent à la formule $RX(R_aO)_x(R_bO)_yR_c$, dans laquelle R est choisi parmi les groupes alkyles ayant de 1 à 10 atomes de carbone, les groupes hydrocarbonés aliphatiques ayant de 2 à 6 valences, et les substituants comprenant un hétérocycle dans lequel le ou les hétéroatomes sont l'oxygène, X est choisi parmi O et S, $R_a$ est un groupe alkylène en C2, $R_b$ est un groupe alkylène en C3, $R_c$ est identique à R ou représente H, x et y valent 0 ou un entier inférieur ou égal à 100, indépendamment. La somme x+y est un entier de 5 à 100. Les groupes hydrocarbonés aliphatiques comprennent notamment les alcanes, les alcènes, les alcynes, et en particulier les groupes méthyle, butyle et propyle. Le lubrifiant peut être un homopolymère d'oxypropylène, linéaire. Des terminaisons alkoxy, et notamment méthoxy sont préférées. La viscosité cinématique est de préférence d'au moins 30 cSt, ou 20 cSt, ou 10 cSt à 40°C, ou un indice de viscosité d'au moins 150, ou 120 ou 100. La valeur acide totale est de préférence inférieure à 0,03, ou 0,02, ou 0,01 mgKOH/g.

A titre de nanoparticules on peut notamment utiliser les nanoparticules de charbon, les oxydes métalliques (cuivre, aluminium), $TiO_2$, $Al_2O_3$, $MoS_2$...

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les aminés, les norbornènes, les dérivés de norbornènes, le cyclohexène, les composés aromatiques hétérocycliques, l'ascaridole, l'o-méthoxy(méthyl)-phénol et les combinaisons de ceux-ci.

Pour ce qui est de la climatisation automobile, il est préféré d'utiliser un seul composé de transfert de chaleur (plutôt qu'un mélange) et un seul lubrifiant (plutôt qu'un mélange), pour des questions de stabilité dans le circuit de compression de vapeur.

**EXEMPLE**

Exemple 1 - Propriétés de perméabilité aux réfrigérants fluorés

Dans cet exemple, on compare la perméabilité aux réfrigérants fluorés (R-1234yf) d'une structure tubulaire (selon l'invention) constituée d'une composition comprenant un copolyamide de formule 11/10T en couche interne (polymère P1) et d'une composition comprenant un polyamide de formule PA610 avec des fibres (60% massique de fibres de verre) en couche externe (polymère P2) avec une structure tubulaire standard de type Veneer comportant soit 200 soit 300 microns de PA 6 modifié choc, correspondant au produit commercialisé par DuPont sous le nom Zytel® ST 811.

Les mesures de flux ont été réalisées sur des films de même composition que les couches des structures tubulaires avec une cellule de perméation, par un couplage Lyssy GPM500/GC à une température de 23°C et 0 % d'humidité relative. La face supérieure de la cellule est balayée par le gaz d'essai, et le flux diffusant à travers le film dans la partie inférieure est mesuré par chromatographie en phase gazeuse. On utilise de l'hélium en tant que gaz vecteur balayant la partie inférieure.

La perméation des structures tubulaires est calculée par la loi usuelle de perméation d'un multicouche, à savoir

$$e/P = \sum ei/Pi$$

e et P sont l'épaisseur et la perméabilité de la structure multicouche
ei et Pi sont les épaisseurs et les perméabilités de chacune des couches de la structure

Les résultats des calculs sont reproduits dans les tableaux 1 ci-dessous. Les flux de réfrigérants sont exprimés en $cm^3/m^2/24$ h/atm.

Tableau 1 _ résultats pour le R-1234yf

|  | Flux |
| --- | --- |
| Structure Veneer avec 0.2 mm de Zytel® ST 811 | 0.0025 |
| Structure Veneer avec 0.3 mm de Zytel® ST 811 | 0.0017 |
| Structure selon l'invention P2/P1 (mm), 0,2/1 | <0.00025 |

La structure de l'invention est meilleure barrière au R-1234yf que la structure Veneer.

## Revendications

1. Structure tubulaire pour le transport de fluide de transfert de chaleur, en particulier de fluide frigorigène, comprenant au moins : une couche (1) en contact avec le fluide, comprenant au moins un polymère $P_1$ thermoplastique et une couche (2) comprenant au moins (a) un polymère $P_2$ thermoplastique et (b) des fibres continues, **caractérisée en ce que**,
   ledit polymère $P_1$ thermoplastique est semi-cristallin et présente une $Tf_1$ supérieure ou égale à 160°C en particulier supérieure ou égale à 170°C telle que déterminée selon la norme 11357-3 (2013) ou amorphe de $Tg_1$ supérieure ou égale à 100°C de préférence 120°C en particulier 140°C telle que déterminée selon la norme 11357-2 (2013), et ladite couche (1) étant dépourvue de fibres,
   ledit polymère $P_2$ thermoplastique est semi-cristallin et est en particulier un polyamide de $Tf_2$ supérieure ou égale à 170°C ou amorphe de $Tg_2$ supérieure ou égale à 100°C, ou une polyoléfine de Tf supérieure à 100°C ;
   le polymère $P_2$ étant identique à $P_1$ ou différent de $P_1$ auquel cas les polymères $P_1$ et P2 adhèrent au moins partiellement entre eux.

2. Structure selon la revendication 1, **caractérisée en ce que** ledit polymère $P_1$ est choisi parmi les polyamides et l'EVOH, en particulier les polyamides.

3. Structure selon l'une des revendications 1 ou 2, **caractérisée en ce que** ledit polymère $P_1$ est un polyamide semi-cristallin.

4. Structure selon l'une des revendications 1 à 3, **caractérisée en ce que** ledit polymère $P_2$ est choisi parmi les polyamides et les polyoléfines.

5. Structure selon l'une des revendications 1 à 4, **caractérisée en ce que** ledit polymère $P_2$ est un polyamide semi-cristallin.

6. Structure selon l'une des revendications 1 à 5, **caractérisée en ce que** lesdits polymères $P_1$ et $P_2$ sont des polyamides semi-cristallins.

**7.** Structure selon l'une des revendications 1 à 6, **caractérisée en ce que** ledit polymère $P_2$ est un polyamide amorphe.

**8.** Structure selon la revendication 1, **caractérisée en ce que** ledit le polymère $P_1$ est un polyamide choisi parmi les polyphtalamides, les polyamides semi-aromatiques, notamment A/T, A/10T, A/6T, XY/10T et XY/6T, PA6, PA66, PA6/66, PA610, PA612, un polyamide à courte chaîne en C4 à C8, notamment issu de la polymérisation de lactames ou acides aminocarboxyliques en C4-C8, ou de la polymérisation d'au moins une diamine et au moins un acide dicarboxylique dont le nombre moyen d'atome de carbone est compris de C4 à C8, et un mélange PA/polyoléfine, ladite polyoléfine pouvant être fonctionnalisée (tout ou partie) ou non, en particulier un Orgalloy®.

**9.** Structure selon la revendication 8, **caractérisée en ce que** ledit polymère $P_1$ est un polyamide choisi parmi les polyphtalamides, les polyamides semi-aromatiques, notamment 11/10T, 612/10T, 11/6T, PA6, PA66, PA6/66, PA610, PA612, un polyamide à courte chaîne en C4 à C8, et un mélange PA/polyoléfine, ladite polyoléfine pouvant être fonctionnalisée ou non.

**10.** Structure selon l'une des revendications 8 ou 9, **caractérisée en ce que** ledit polymère $P_1$ est un polyamide choisi parmi les polyamides semi-aromatiques, notamment 11/10T, 612/10T, 11/6T, PA6, PA66, PA6/66, PA610, PA612, un polyamide à courte chaîne en C4 à C8, et un mélange PA/polyoléfine, ladite polyoléfine pouvant être fonctionnalisée ou non.

**11.** Structure selon l'une des revendications 8 à 10, **caractérisée en ce que** ledit polymère $P_1$ est un polyamide choisi parmi les polyphtalamides, les polyamides semi-aromatiques, notamment 11/10T, 612/10T, 11/6T, PA6, PA66, PA6/66, un polyamide à courte chaîne en C4 à C8, et un mélange PA/polyoléfine, ladite polyoléfine pouvant être fonctionnalisée ou non, à l'exclusion de PA610 et PA612.

**12.** Structure selon l'une des revendications 8 à 11, **caractérisée en ce que** ledit polymère $P_1$ est un polyamide choisi parmi les polyamides semi-aromatiques, notamment 11/10T, 612/10T, 11/6T, PA6, PA66, PA6/66, un polyamide à courte chaîne en C4 à C8, et un mélange PA/polyoléfine, ladite polyoléfine pouvant être fonctionnalisée ou non, à l'exclusion de PA610 et PA612.

**13.** Structure selon l'une des revendications 1 à 12, **caractérisée en ce que** ledit polymère $P_2$ est un polyamide choisi parmi les polyphtalamides, les polyamides semi-aromatiques, notamment 11/10T et 11/6T, PA11, PA12, PA6, PA66, PA6/66, PA610, PA612.

**14.** Structure selon l'une des revendications 1 à 13, **caractérisée en ce que** ledit polymère $P_1$ et/ou ledit polymère $P_2$, comprend au moins un liant.

**15.** Structure selon l'une des revendications 1 à 14, **caractérisée en ce qu'**elle comprend au moins une troisième couche (3) extérieure, ladite couche étant en contact avec la couche (2) et comprenant un élastomère et /ou un polymère $P_3$ identique ou différent de $P_1$ et adhérant au moins partiellement à $P_2$.

**16.** Structure selon l'une des revendications 1 à 15, **caractérisée en ce que** les fibres continues sont choisies parmi :

- les fibres minérales
- les fibres de carbone et les nanotubes de carbone
- les fibres polymériques ou de polymère,
- ou les mélanges des fibres précitées.

**17.** Structure selon l'une des revendications 1 à 16, dans laquelle :

- les fibres minérales sont choisies parmi : les fibres de silice comme les fibres de verre, notamment de type E, R ou S2 ; fibres de bore ; fibres céramiques, notamment de carbure de silicium, de carbure de bore, de carbonitrure de bore, de nitrure de silicium, de nitrure de bore ; fibres de basalte ; fibres ou filaments à base de métaux et leurs alliages ; fibres à base d'oxydes métalliques ; fibres de carbone métallisées et fibres de verre métallisées ou les mélanges des fibres citées, et
- les fibres polymériques sont choisies parmi :

  ■ les fibres de polymères thermodurcissables
  ■ les fibres de polymères thermoplastiques

■ les fibres de polyamides répondant à l'une des polyamides suivants : 6, 66, 610, 612, 46, 410, 1010, 1012, 11 et 12

■ les fibres d'aramides et de polyamides aromatiques tels que ceux répondant à l'une des formules : PPD.T, MPD.I, PAA et PPA

■ ou les mélanges des fibres précitées ci-haut.

18. Structure selon l'une des revendications 1 à 17, dans laquelle la proportion en poids de fibres dans la couche comprenant $P_2$ est comprise de 30 à 80%, de préférence de 50 à 70%.

19. Structure selon l'une des revendications 1 à 18, dans laquelle le fluide frigorigène est choisi parmi les composés hydrocarbures, hydrofluorocarbures, éthers, hydrofluoroéthers ou fluorooléfines, notamment parmi les fluoropropènes, les fluoropropanes et les fluoroéthanes ; de préférence parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci ; et de manière particulièrement préférée ledit fluide frigorigène étant du 2,3,3,3-tétrafluoropropène (1234yf) ou du 1,3,3,3-tétrafluoropropène (1234ze).

20. Structure selon l'une des revendications 1 à 19, dans laquelle le fluide frigorigène est additionné d'un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyol esters et/ou les polyvinyléthers ; le lubrifiant étant de manière plus particulièrement préférée un polyalkylène glycol ou un polyol ester.

21. Structure selon la revendication 20, dans laquelle le dit lubrifiant est en proportion en poids de 0,5% à 50%, en particulier de 1 à 15%.

22. Structure selon l'une des revendications 1 à 21, qui est un élément de circuit de compression de vapeur pour contenir ou transporter un fluide frigorigène, ledit élément de circuit de compression de vapeur étant de préférence un élément de connexion ou une conduite.

23. Structure selon l'une des revendications 1 à 22, dans laquelle le circuit de compression de vapeur est intégré dans un dispositif choisi parmi les dispositifs de climatisation mobile ou stationnaire, les dispositifs de réfrigération, les dispositifs de congélation, les dispositifs de chauffage par pompe à chaleur et les cycles de Rankine ; et de préférence est intégré dans un dispositif de climatisation automobile.

24. Procédé de fabrication de la structure selon l'une des revendications 1 à 23, **caractérisé en ce qu'**il comprend au moins une étape d'extrusion de la couche (1).

25. Procédé de fabrication selon la revendication 24, **caractérisé en ce qu'**il comprend les étapes successives suivantes :

a. fabrication de ladite couche (1) par extrusion à travers une filière annulaire et

b. dépôt sur ladite couche (1) de ladite couche (2) externe à l'état fondu par la technique d'enroulement filamentaire de fibres imprégnées de polymère P2 à l'état fondu avec un ou plusieurs angles d'orientation par rapport à l'axe de ladite structure et

c. refroidissement de ladite structure.

26. Utilisation d'une structure thermoplastique selon l'une des revendications 1 à 23 pour le transport d'un fluide frigorigène dans un circuit de compression de vapeur.

**Patentansprüche**

1. Röhrenförmige Struktur für den Transport einer Wärmeübertragungsflüssigkeit, insbesondere eines Kühlmittels, umfassend mindestens: eine Schicht (1) in Kontakt mit der Flüssigkeit mit mindestens einem thermoplastischen Polymer $P_1$ und eine Schicht (2) mit mindestens (a) einem thermoplastischen Polymer $P_2$ und (b) Endlosfasern,

**dadurch gekennzeichnet, dass**
das thermoplastische Polymer $P_1$ halbkristallin ist und eine $Tf_1$ von größer oder gleich 160 °C, insbesondere größer oder gleich 170 °C aufweist, wie gemäß der Norm 11357-3 (2013) festgelegt, oder amorph ist und eine $Tg_1$ von größer oder gleich 100 °C, bevorzugt 120 °C, insbesondere 140 °C, aufweist, wie gemäß der Norm 11357-2 (2013) festgelegt, wobei die Schicht (1) faserlos ist,
das thermoplastische Polymer $P_2$ halbkristallin und insbesondere ein Polyamid mit einer Tf2 von größer oder gleich 170 °C oder amorph mit einer $Tg_2$ von größer oder gleich 100 °C ist oder ein Polyolefin mit einer Tf von über 100 °C ist; das Polymer $P_2$ gleich $P_1$ oder verschieden von $P_1$ ist, wobei in diesem Fall die Polymere $P_1$ und $P_2$ zumindest teilweise aneinanderhaften.

2. Struktur nach Anspruch 1, **dadurch gekennzeichnet, dass** das Polymer $P_1$ ausgewählt ist aus Polyamiden und EVOH, insbesondere aus Polyamiden.

3. Struktur nach einem der Ansprüche 1 oder 2, **dadurch gekennzeichnet, dass** das Polymer $P_1$ ein halbkristallines Polyamid ist.

4. Struktur nach einem der Ansprüche 1 bis 3, **dadurch gekennzeichnet, dass** das Polymer $P_2$ aus Polyamiden und Polyolefinen ausgewählt ist.

5. Struktur nach einem der Ansprüche 1 bis 4, **dadurch gekennzeichnet, dass** das Polymer $P_2$ ein halbkristallines Polyamid ist.

6. Struktur nach einem der Ansprüche 1 bis 5, **dadurch gekennzeichnet, dass** die Polymere $P_1$ und $P_2$ halbkristalline Polyamide sind.

7. Struktur nach einem der Ansprüche 1 bis 6, **dadurch gekennzeichnet, dass** das Polymer $P_2$ ein amorphes Polyamid ist.

8. Struktur nach Anspruch 1, **dadurch gekennzeichnet, dass** das Polymer $P_1$ ein Polyamid ausgewählt aus Polyphthalamiden, teilaromatischen Polyamiden, insbesondere A/T, A/10T, A/6T, XY/10T und XY/6T, PA6, PA66, PA6/66, PA610, PA612, einem kurzkettigen C4- bis C8-Polyamid, insbesondere hergestellt durch Polymerisation von Laktamen oder C4- bis C8-Aminocarbonsäuren oder Polymerisation von mindestens einem Diamin und mindestens einer Dicarbonsäure mit einer mittleren Anzahl von Kohlenstoffatomen zwischen C4 und C8, und einer PA/Polyolefin-Mischung ist, wobei das Polyolefin (vollständig oder teilweise) funktionalisiert sein kann oder nicht, insbesondere ein Orgalloy®.

9. Struktur nach Anspruch 8, **dadurch gekennzeichnet, dass** das Polymer $P_1$ ein Polyamid ausgewählt aus Polyphthalamiden, teilaromatischen Polyamiden, insbesondere 11/10T, 612/10T, 11/6T, PA6, PA66, PA6/66, PA610, PA612, einem kurzkettigen C4- bis C8-Polyamid und einer PA/Polyolefin-Mischung ist, wobei das Polyolefin funktionalisiert sein kann oder nicht.

10. Struktur nach einem der Ansprüche 8 oder 9, **dadurch gekennzeichnet, dass** das Polymer $P_1$ ein Polyamid ausgewählt aus teilaromatischen Polyamiden, insbesondere 11/10T, 612/10T, 11/6T, PA6, PA66, PA6/66, PA610, PA612, einem kurzkettigen C4-bis C8-Polyamid und einer PA/Polyolefin-Mischung ist, wobei das Polyolefin funktionalisiert sein kann oder nicht.

11. Struktur nach einem der Ansprüche 8 bis 10, **dadurch gekennzeichnet, dass** das Polymer $P_1$ ein Polyamid ausgewählt aus Polyphthalamiden, teilaromatischen Polyamiden, insbesondere 11/10T, 612/10T, 11/6T, PA6, PA66, PA6/66, einem kurzkettigen C4- bis C8-Polyamid und einer PA/Polyolefin-Mischung ist, wobei das Polyolefin funktionalisiert sein kann oder nicht, mit Ausnahme von PA610 und PA612.

12. Struktur nach einem der Ansprüche 8 bis 11, **dadurch gekennzeichnet, dass** das Polymer $P_1$ ein Polyamid ausgewählt aus teilaromatischen Polyamiden, insbesondere 11/10T, 612/10T, 11/6T, PA6, PA66, PA6/66, einem kurzkettigen C4- bis C8-Polyamid und einer PA/Polyolefin-Mischung ist, wobei das Polyolefin funktionalisiert sein kann oder nicht, mit Ausnahme von PA610 und PA612.

13. Struktur nach einem der Ansprüche 1 bis 12, **dadurch gekennzeichnet, dass** das Polymer $P_2$ ein Polyamid ausgewählt aus Polyphthalamiden, teilaromatischen Polyamiden, insbesondere 11/10T und 11/6T, PA11, PA12, PA6, PA66, PA6/66, PA610, PA612 ist.

14. Struktur nach einem der Ansprüche 1 bis 13, **dadurch gekennzeichnet, dass** ds Polymer $P_1$ und/oder ds Polymer $P_2$ mindestens ein Bindemittel umfasst.

15. Struktur nach einem der Ansprüche 1 bis 14, **dadurch gekennzeichnet, dass** sie mindestens eine dritte äußere Schicht (3) aufweist, wobei die Schicht Kontakt zur Schicht (2) hat und ein Elastomer und/oder ein Polymer $P_3$ aufweist, das gleich oder verschieden von $P_1$ ist und zumindest teilweise an $P_2$ haftet.

16. Struktur nach einem der Ansprüche 1 bis 15, **dadurch gekennzeichnet, dass** die Endlosfasern ausgewählt sind aus:

   - mineralischen Fasern
   - Kohlenstoff-Fasern und Kohlenstoff-Nanoröhrchen,
   - polymeren Fasern oder Polymerfasern,
   - oder Mischungen der oben angegebenen Fasern.

17. Struktur nach einem der vorstehenden Ansprüche 1 bis 16, bei der:

   - die mineralischen Fasern ausgewählt sind aus: Siliciumdioxidfasern, wie Glasfasern, insbesondere vom Typ E, R oder S2; Borfasern; Keramikfasern, insbesondere Siliciumkarbid, Borkarbid, Borkarbonitrid, Siliciumnitrid, Bornitrid; Basaltfasern; Fasern oder Filamenten auf der Basis von Metallen und deren Legierungen; Fasern auf der Basis von Metalloxiden; metallisierten Kohlenstofffasern und metallisierten Glasfasern oder Mischungen der erwähnten Fasern, und
   - die polymeren Fasern ausgewählt sind aus:

     ▪ wärmehärtbaren Polymerfasern
     ▪ thermoplastischen Polymerfasern
     ▪ Fasern aus Polyamiden, die einem der folgenden Polyamide entsprechen: 6, 66, 610, 612, 46, 410, 1010, 1012, 11 und 12
     ▪ Fasern aus Aramiden und aromatischen Polyamiden, wie die, die einer der folgenden Formeln entsprechen: PPD.T, MPD.I, PAA und PPA
     ▪ oder Mischungen der oben angegebenen Fasern.

18. Struktur nach einem der Ansprüche 1 bis 17, wobei der Faseranteil in der P2-haltigen Schicht zwischen 30 und 80 Gew.-%, vorzugweise zwischen 50 und 70 Gew.-%, liegt.

19. Struktur nach einem der Ansprüche 1 bis 18, wobei das Kühlmittel ausgewählt ist aus Kohlenwasserstoffverbindungen, Fluorkohlenwasserstoffen, Ethern, Hydrofluorethern oder Fluorolefinen, insbesondere aus Fluorpropenen, Fluorpropanen und Fluorethanen; vorzugsweise aus 1,3,3,3-Tetrafluorpropen, 2,3,3,3-Tetrafluorpropen, 1,2,3,3,3-Pentafluorpropen, 1,1,3,3-Tetrafluorpropen, 3,3,3-Trifluorpropen, 2,3,3-Trifluorpropen, 1,1,1,2-Tetrafluorethan, 1,1,2,2-Tetrafluorethan, Pentafluorethan, Difluormethan, 1,1-Difluorethan, 1,1,1,2,3,3-Heptafluorpropan, 1,1,1-Trifluorpropan, 1,1,1,3,3-Hexafluorpropan, 1,1,1,3,3-Pentafluorpropan, 1,1,1,3,3-Pentafluorbutan, Trifluoriodmethan und Mischungen auf Basis dieser Stoffe; wobei das Kühlmittel besonders bevorzugt 2,3,3,3-Tetrafluorpropen (1234yf) oder 1,3,3,3-Tetrafluorpropen (1234ze) ist.

20. Struktur nach einem der Ansprüche 1 bis 19, wobei dem Kühlmittel ein Schmiermittel beigefügt wird, vorzugsweise ausgewählt aus Mineralölen, Silikonölen, Paraffinen natürlichen Ursprungs, Naphthenen, synthetischen Paraffinen, Alkylbenzolen, Poly-Alpha-Olefinen, Polyalkylenglykolen, Polyolestern und/oder Polyvinylethern; wobei das Schmiermittel ganz besonders bevorzugt ein Polyalkylenglykol oder Polyolester ist.

21. Struktur nach Anspruch 20, wobei der Anteil des Schmiermittels 0,5 bis 50 Gew.-%, insbesondere 1 bis 15 Gew.-%, beträgt.

22. Struktur nach einem der Ansprüche 1 bis 21, die ein Element eines Dampfkompressionskreislaufes ist, der ein Kühlmittel enthält oder transportiert, wobei das Element eines Dampfkompressionskreislaufes vorzugsweise ein Verbindungselement oder eine Leitung ist.

23. Struktur nach einem der Ansprüche 1 bis 22, wobei der Dampfkompressionskreislauf in eine Vorrichtung integriert ist, die ausgewählt ist aus mobilen oder stationären Klimatisierungsvorrichtungen, Kühlvorrichtungen, Gefriervorrichtungen, Heizungsvorrichtungen über Wärmepumpen und Clausius-Rankine-Kreisprozesse; und die Vorrichtung vorzugsweise in eine Kraftfahrzeug-Klimaanlage integriert ist.

24. Verfahren zur Herstellung der Struktur nach einem der Ansprüche 1 bis 23, **dadurch gekennzeichnet, dass** es mindestens einen Schritt zur Extrusion der Schicht (1) umfasst.

25. Herstellungsverfahren nach Anspruch 24, **dadurch gekennzeichnet, dass** es folgende aufeinanderfolgende Schritte umfasst:

    a. Herstellung der Schicht (1) mittels Extrusion durch eine Ringdüse und
    b. Aufbringung auf die Schicht (1) der externen Schicht (2) im geschmolzenen Zustand durch die Technik der Filamentwicklung von mit dem Polymer P2 im geschmolzenen Zustand imprägnierten Fasern in einem oder mehreren Ausrichtungswinkeln zur Achse der Struktur und
    c. Abkühlung der Struktur.

26. Verwendung einer thermoplastischen Struktur nach einem der Ansprüche 1 bis 23 für den Transport eines Kühlmittels in einem Dampfkompressionskreislauf.

**Claims**

1. Tubular structure for transporting heat transfer fluid, in particular refrigerant fluid, comprising at least: one (1) layer in contact with the fluid, comprising at least one thermoplastic polymer $P_1$, and a layer (2) comprising at least (a) one thermoplastic polymer $P_2$ and (b) continuous fibres, **characterised in that**:

    said thermoplastic polymer $P_1$ is semi-crystalline and has a $Tf_1$ greater than or equal to 160°C, in particular greater than or equal to 170°C, as determined in accordance with standard 11357-3 (2013), or amorphous with a $Tg_1$ greater than or equal to 100°C, preferably 120°C, particularly 140°C, as determined in accordance with standard 11357-2 (2013), and said layer (1) being devoid of fibres;
    said thermoplastic polymer $P_2$ is semi-crystalline and is in particular a polyamide with a Tf2 greater than or equal to 170°C, or amorphous with a $Tg_2$ greater than or equal to 100°C, or a polyolefin with a Tf greater than 100°C; and
    said polymer $P_2$ being identical to $P_1$ or different from $P_1$ in which case polymers $P_1$ and $P_2$ adhere at least partially to each other.

2. Structure according to claim 1, **characterised in that** said polymer $P_1$ is chosen among the polyamides and EVOH, in particular the polyamides.

3. Structure according to either of claims 1 and 2, **characterised in that** said polymer $P_1$ is a semi-crystalline polyamide.

4. Structure according to one of claims 1 to 3, **characterised in that** said polymer $P_2$ is chosen among the polyamides and the polyolefins.

5. Structure according to one of claims 1 to 4, **characterised in that** said polymer $P_2$ is a semi-crystalline polyamide.

6. Structure according to one of claims 1 to 5, **characterised in that** said polymers $P_1$ and $P_2$ are semi-crystalline polyamides.

7. Structure according to one of claims 1 to 6, **characterised in that** said polymer $P_2$ is an amorphous polyamide.

8. Structure according to claim 1, **characterised in that** said polymer $P_1$ is a polyamide chosen among the polyphthalamides, the semi-aromatic polyamides, in particular A/T, A/10T, A/6T, XY/10T, and XY/6T, PA6, PA66, PA6/66, PA610, PA612, a C4 to C8 short-chain polyamide, in particular resulting from the polymerisation of lactams or C4-C8 aminocarboxylic acids, or from the polymerisation of at least one diamine and at least one dicarboxylic acid with an average number of carbon atoms comprised within a range of from C4 to C8, and a PA/polyolefin blend, said polyolefin possibly being (totally or partially) functionalised or non-functionalised, in particular an Orgalloy®.

9. Structure according to claim 8, **characterised in that** said polymer $P_1$ is a polyamide chosen among the polyphthalamides, the semi-aromatic polyamides, in particular 11/10T, 612/10T, 11/6T, PA6, PA66, PA6/66, PA610 and PA612, a C4 to C8 short-chain polyamide, and a PA/polyolefin blend, said polyolefin possibly being functionalised or non-functionalised.

10. Structure according to either of claims 8 or 9, **characterised in that** said polymer $P_1$ is a polyamide chosen among the semi-aromatic polyamides, in particular 11/10T, 612/10T, 11/6T, PA6, PA66, PA6/66, PA610 and PA612, a C4 to C8 short-chain polyamide, and a PA/polyolefin blend, said polyolefin possibly being functionalised or non-functionalised.

11. Structure according to one of claims 8 to 10, **characterised in that** said polymer $P_1$ is a polyamide chosen among the polyphthalamides, the semi-aromatic polyamides, in particular 11/10T, 612/10T, 11/6T, PA6, PA66 and PA6/66, a C4 to C8 short-chain polyamide, and a PA/polyolefin blend, said polyolefin possibly being functionalised or non-functionalised, excluding PA610 and PA612.

12. Structure according to one of claims 8 to 11, **characterised in that** said polymer $P_1$ is a polyamide chosen among the semi-aromatic polyamides, in particular 11/10T, 612/10T, 11/6T, PA6, PA66 and PA6/66, a C4 to C8 short-chain polyamide, and a PA/polyolefin blend, said polyolefin possibly being functionalised or non-functionalised, excluding PA610 and PA612.

13. Structure according to one of claims 1 to 12, **characterised in that** said polymer $P_2$ is a polyamide chosen among the polyphthalamides, the semi-aromatic polyamides, in particular 11/10T and 11/6T, PA11, PA12, PA6, PA66, PA6/66, PA610, PA612.

14. Structure according to one of claims 1 to 13, **characterised in that** said polymer $P_1$ and/or said polymer P2 comprise at least one binding agent.

15. Structure according to one of claims 1 to 14, **characterised in that** it comprises at least a third outer layer (3), said layer being in contact with the layer (2) and comprising an elastomer and/or a polymer $P_3$ which is identical to or different to $P_1$ and which adheres at least partially to $P_2$.

16. Structure according to one of claims 1 to 15, **characterised in that** the continuous fibres are chosen among:

   - the mineral fibres;
   - the carbon fibres and carbon nanotubes;
   - the polymeric or polymer fibres;
   - or mixtures thereof.

17. Structure according to one of claims 1 to 16, wherein:

   - the mineral fibres are chosen among: the silica fibres such as glass fibres, especially of the E, R or S2 type; boron fibres; ceramic fibres, especially of silicon carbide, boron carbide, boron carbonitride, silicon nitride, boron nitride; basalt fibres; fibres or filaments based on metals and alloys thereof; metal oxide-based fibres; metallized carbon fibres and metallized glass fibres or mixtures of said aforementioned fibres, and
   - the polymeric fibres are chosen among:

      - the thermosetting polymer fibres
      - the thermoplastic polymer fibres
      - the fibres of polyamides corresponding to one of the following polyamides: 6, 66, 610, 612, 46, 410, 1010, 1012, 11 and 12
      - the fibres of aramids and of aromatic polyamides such as those corresponding to one of the formulae: PPD.T, MPD.I, PAA and PPA
      - or mixtures of the aforementioned fibres.

18. Structure according to one of claims 1 to 17, wherein the proportion by weight of fibres in the layer comprising $P_2$ is comprised within a range of from 30 to 80%, preferably from 50 to 70%.

19. Structure according to one of claims 1 to 18, wherein the refrigerant fluid is chosen among the hydrocarbon, hydrofluorocarbon, ether, hydrofluoroether or fluoroolefin compounds, in particular among the fluoropropenes, fluoropropanes and fluoroethanes; preferably among the 1,3,3,3-tetrafluoropropene, 2,3,3,3-tetrafluoropropene, 1,2,3,3,3-pentafluoropropene, 1,1,3,3-tetrafluoropropene, 3,3,3-trifluoropropene, 2,3,3-trifluoropropene, 1,1,1,2-tetrafluoroethane, 1,1,2,2-tetrafluoroethane, pentafluoroethane, difluoromethane, 1,1-difluoroethane, 1,1,1,2,3,3,3-heptafluoropropane, 1,1,1-trifluoropropane, 1,1,1,3,3,3-hexafluoropropane, 1,1,1,3,3-pentafluoropropane, 1,1,1,3,3-pentafluorobutane, trifluoroiodomethane and mixtures comprising said compounds; and particularly preferably, said refrigerant fluid being 2,3,3,3-tetrafluoropropene (1234yf) or 1,3,3,3-tetrafluoropropene (1234ze).

20. Structure according to one of claims 1 to 19, wherein the refrigerant fluid is supplemented with a lubricant, preferably chosen among the mineral oils, silicone oils, paraffins of natural origin, naphthenes, synthetic paraffins, alkyl benzenes, poly-alpha-olefins, polyalkylene glycols, polyol esters and/or polyvinyl ethers; said lubricant being more particularly preferably a polyalkylene glycol or a polyol ester.

21. Structure according to claim 20, wherein said lubricant is in a proportion by weight of from 0.5% to 50%, in particular from 1% to 15%.

22. Structure according to one of claims 1 to 21, which is an element of a vapour-compression circuit for containing or transporting a refrigerant fluid, said vapour-compression circuit element preferably being a connection element or a pipe.

23. Structure according to one of claims 1 to 22, wherein the vapour-compression circuit is incorporated into a device chosen among the mobile or stationary air-conditioning devices, refrigeration devices, freezing devices, heating devices operating by means of heat pumps and Rankine cycles; and it is preferably incorporated into a motor vehicle air-conditioning device.

24. Process for manufacturing the structure according to one of claims 1 to 23, **characterised in that** it comprises at least one step of extruding the layer (1).

25. Manufacturing process according to claim 24, **characterised in that** it comprises the following successive steps:

a. manufacturing said layer (1) by extrusion through a ring die; and
b. depositing, on said layer (1), said outer layer (2) in the molten state, using the technique of filament winding of fibres impregnated with molten polymer P2, with one or more angles of orientation relative to the axis of said structure; and
c. cooling said structure.

26. Use of a thermoplastic structure according to one of claims 1 to 23, for transporting a refrigerant fluid in a vapour-compression circuit.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110183095 A
- US 20110272854 A
- EP 1717022 A
- WO 2014125218 A
- DE 102008037490
- EP 2578391 A
- WO 2014125219 A
- EP 2098365 A
- EP 2098580 A
- JP H1139628 B
- EP 0471566 A
- WO 2010015786 A
- WO 2010015785 A
- US 20120279605 A
- US 20100282999 A
- US 20100175421 A
- WO 2010075046 A

**Littérature non-brevet citée dans la description**

- Cycloaliphatic Aminés. Encyclopaedia of Chemical Technology, Kirk-Othmer. 1992, 386-405